# EUROPEAN PATENT APPLICATION

(11) **EP 1 635 544 A1**
(43) Date of publication of application: **15.03.2006**
(21) Application number: 04106105.2
(22) Date of filing: 26.11.2004
(51) Int. Cl.: H04M 1/725

(54) **Mobile device with adaptive user interface**

(30) Priority: 13.09.2004 EP 41044181
(71) Applicant: Sony Ericsson Mobile Communications AB, 221 88 Lund (SE)
(72) Inventor: Svener, Johan, 216 15 Limhamn (SE); Nilsson, Richard, 223 53 Lund (SE)
(74) Representative: Akerman, Marten Lennart

(57) **Abstract**

The invention relates to a device (1) combining different device categories with different operation modes each having different preferred user interface modes comprising: a user interface comprising a keypad (8) with a number of keys and a display (4). In accordance with the invention, a control unit is arranged to control the user interface in dependence of a selected operation mode of the device such that different device categories are combined without compromising the traditional UI orientation and key placements for the individual device categories.

## Description

### Field of the invention

The present invention relates to a device with an adaptive user interface, and more particularly a combined mobile device including e.g. a telephone, a digital camera, and a handheld portable game device having a user interface with display and keys, wherein the function and arrangement of the display and the keys depends on the operation mode of the telephone.

### State of the art

From document WO 00/79772 is known a mobile telephone which may be held in two different positions. What is shown on the display and the arrangement of the keys of the keypad depend on the current position of the device, the current use of the device or the setting selected by the user. The arrangement of the keys may be dependent of a position sensor detecting the force of gravity. The device has a small display in landscape mode when held upright making it unsuitable for use as a camera or game device. The device is not of foldable type having two parts that may be arranged at an angle relative to each other.

There are some mobile phones on the market that have combined two usage modes; their MMI (MultiMedia Interface) display may be rotated between an upright "portrait" mode and a horizontal "landscape" mode. The first is typically used when using it as a phone and the latter is e.g. used when reading/writing e-mails or during browsing.

When combining different product types into one device, the MMI paradigm typically will be a compromise between the traditional MMI paradigms of the integrated products. From a user experience perspective, the problem is how to get the industry standard ways of user interactions for the different integrated products.

In other words, the problem is to combine different device categories such as a mobile phone, a digital camera, and a handheld portable game device into one product without compromising the traditional UI (User Interface) orientation and key placements for the individual device categories.

### Summary of the invention

The present invention solves this problem by providing an automatically adapting user interface. This enables the MMI to have e.g. three different orientations. The input keys are not dedicated to any of the modes; instead they are generally reused and assigned other/new meanings in combination with the rotation of the rest of the graphical UI.

The present invention provides a portable device combining different device categories with different operation modes each having different preferred user interface modes, comprising:
a user interface comprising a keypad with a number of keys and a display.

In accordance with the invention, a control unit arranged to control the user interface in dependence of a selected operation mode of the device.

In one embodiment the device comprises:
an upper part and a lower part that can be folded together into a closed state and
unfolded into opened states in which the upper part and the lower part are arranged at an angle relative to each other, the device being operable in both the closed and
opened states; wherein said user interface comprises a keypad with a number of keys provided on one of the two parts and a display provided on the other of the two parts, possibly together with further keys, and said control unit is further arranged to control the user interface in dependence of the relative angle between the two parts.

Preferably, the control unit is further arranged to control the user interface in dependence of predetermined settings selected by a user.

The predetermined settings may include a general right-handed mode and a general left-handed mode.

Preferably, the control unit is arranged to control the orientation of an image object shown on the display.

Preferably, the control unit is arranged to control the assignment of key functions.

The control unit may be arranged to control illumination of keys.

The device may be a combined mobile phone, digital camera, and portable game device.

### Brief description of the drawings

The invention will be described in detail below with reference to the accompanying drawings, in which:
Fig. 1A is a schematic view of a mobile telephone of the jack knife type in a closed state rotated to be in used in a camera mode;
Fig. 1B is a schematic view of the telephone in fig. 1A opened 180° held upright to be in used in a phone mode;
Fig. 1C is a schematic view of the telephone in fig. 1A in a closed state rotated to be in used in a game mode;
Fig. 2A is a schematic view of the telephone in fig. 1A opened 90° held with the upper part upright and the lower part to the left;
Fig. 2B is a schematic view of the telephone in fig. 1A opened 90° held with the upper part upright and the lower part to the right;
Fig. 2C is a schematic view of the telephone in fig. 1A in a closed state rotated to be in used in a game mode for a left-handed user;
Fig. 2D is a schematic view of the telephone in fig. 1A in a closed state rotated to be in used in a game mode for a right-handed user;
Fig. 3A is a schematic view of the telephone in fig. 1A opened 90° held with the upper part horizontal and the lower part vertical to the right;
Fig. 3B is a schematic view of the telephone in fig. 1A opened 90° held with the upper part horizontal and the lower part vertical to the left;
Fig. 3C is a schematic view of the telephone in fig. 1A in a closed state rotated to be in used in a camera mode for a left-handed user;
Fig. 3D is a schematic view of the telephone in fig. 1A in a closed state rotated to be in used in a camera mode for a right-handed user.

### Detailed description of preferred embodiments

The invention will be described with respect to a device such as a mobile phone, a digital camera, and a portable game device combined into one product, that does not compromise the traditional UI orientation and key placements of the individual device categories.

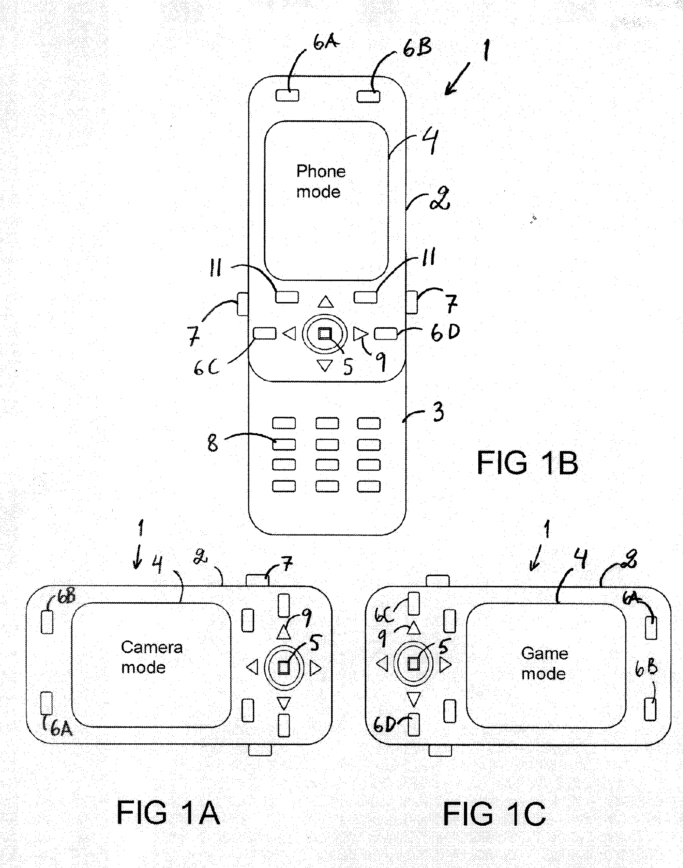

The invention is described with reference to a mobile telephone of the jack knife type, but is also applicable to devices of other types with or without movable parts. A typical mobile telephone 1 of the jack knife type is shown in figs. 1A-C. The device has two parts, an upper part 2 and a lower part 3 as seen by a user. The upper part 2 of the device includes a display 4 and a navigation device such as joystick 5 for manoeuvring with the thumb, and/or direction keys 9. The upper part 2 suitably also carries so-called A, B, C, D keys 6A-D and side keys 7 as well as volume keys 11. The side keys 7 may alternatively be arranged on the lower part 3. The lower part 3, which may be rotated at an angle relative to the upper part 2, includes a conventional keypad 8 with a number of alphanumeric keys, conventionally 0(ABC) -9(WXYZ), * and #. The keypad 8 is used both for writing numbers and letters A-Z as well as other symbols. The upper part 2 and the lower part 3 can be folded together into a closed state as shown in figures 1A and 1C, and opened into states in which the two parts are arranged at an angle relative to each other. As shown in figure 1B, the angle may be 180°. The device is operable in both the closed and opened states. In this specification the term "closed" refers to the folded state of the device and not whether the device 1 is switched on or off.

The device 1 may be used in a phone mode as shown in figure 1B. Then the device is opened 180° such that the device has the joystick 5 and direction keys 9 as well as the keypad 8 and other input keys in majority below the screen and can be operated with one hand only, the right or the left hand. The device 1 may also be closed in the phone mode, e.g. when answering and terminating a call with the Yes and No keys (for instance the lower C and D keys 6C and 6D) provided on the upper part.

The device 1 may be used in a camera mode as shown in figure 1A. Then the device is kept closed and only turned so that it resembles a digital camera. According to the industry standard a digital camera has the UI direction keys 9 to the right side of the screen, as it shall be possible to be used in combination with the shutter button with the same hand - the right hand for a right-handed user.

The device 1 may be used in a game mode as shown in figure 1C. Then the device is kept closed and only turned so that it resembles a game device. A portable game device, as well as regular game pads, has the directional keys 9, such as a joystick 5, placed to be used with the left hand (left thumb) and other game keys, such as the keys 6A and 6C, are placed so they are used with the right hand (right thumb) for a right-handed user - a two hand usage.

To support the different MMI modes described above, and to reuse the keys, the display 4 is rotated in two different ways to fit the MMI orientation that suites the application context at hand.

In the device of the invention, the MMI is controlled so that it is always best adapted for the current situation. The user may adjust the basic settings to a right-handed or left-handed preferred operation. This is normally done once only when setting the personal preferences of the device. When the user wants to use the device he selects an operation mode such as phone, camera or gaming mode. In this connection he also chooses to open the device a specific angle or to keep it closed. Then the device adapts the orientation of the image and texts shown on the display 4, the assignment of functions to the various keys including the joystick 5, the keypad 8, the direction keys 9 and the keypad 8 with the numbers 0-9, * and #, and other symbols.

The relative angle between the upper part 2 and the lower part 3 can be detected in various ways. Angle detection means including for instance Hall-generators and magnets, mechanical interacting fingers and cam surfaces, or a rotary potentiometer with an angle-dependent impedance can be arranged in the rotary connection between the upper part 2 and lower part 3 to detect in principle any angle between 0° and 360°. The angle detection means should be capable of detecting at least the four main positions closed, opened 90°, 180°, 270° (or 90° in the other direction). Mechanical click stops are suitably arranged at these positions to assist the user to maintain the device in the currently desired position. The exact position should not be critical for the operation of the device. Suitable angle intervals can be defined around the four main positions.

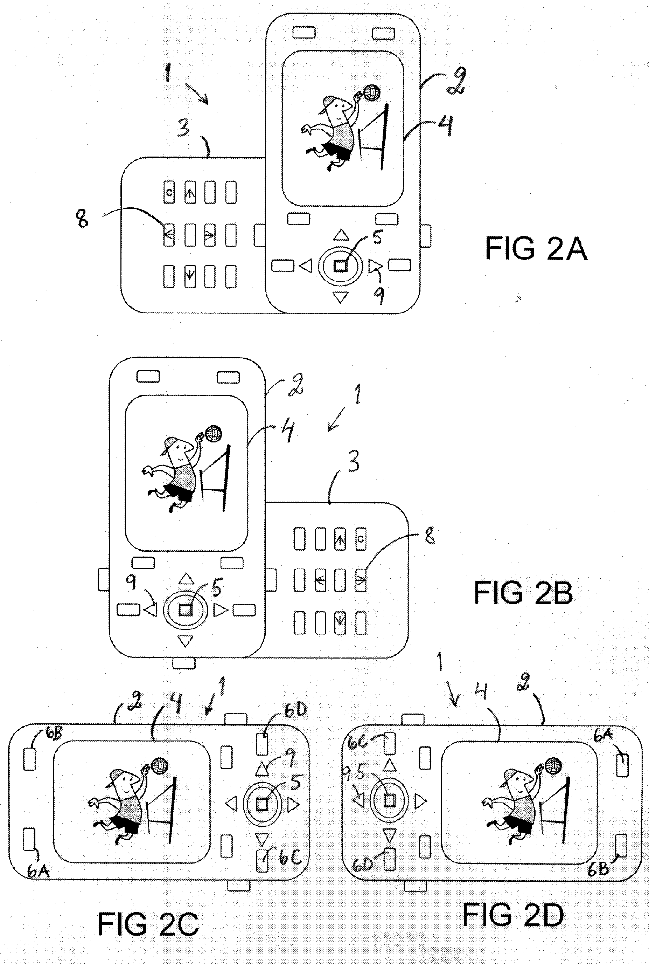

Figs. 2A to 3D illustrate alternative ways of using the device.

Figs. 2A to 2D illustrate the game mode. If the user is left-handed he can adjust the settings of the device to a left-handed arrangement. In this case, the user would prefer to play games with the device opened with the upper part 2 upright and the lower part 3 horizontal to the left as shown in fig. 2A. The lower part 3 is rotated 90 degrees relative to the upper part 2. The user selects the game mode by selecting an operation mode in a menu. When the device is opened and a game selected, the device automatically arranges the keys of the keypad 8 to a suitable arrangement with respect to the selected game. For instance some keys marked with arrows in fig 2A could be assigned the function of direction keys as a complement to the ordinary direction keys 9 and one key marked with c could be used as a cancel key. The function of an arrow key is dependent of the relative angle between the parts so that direction of the arrow on the key corresponds to the direction in the display 4. If some keys are used more often than others, they can be illuminated or highlighted by means of a controlled lighting arrangement, such as individual light emitting diodes at each key. Also, the image in the display 4 would be shown in the portrait mode.

If the device is used by a right-handed user, the device is set in right-hand mode and the user would probably prefer to open the device as shown in fig. 2B. In this case the lower part is rotated 90° in the other direction corresponding to a relative angel of 270° with the upper part 2 upright and the lower part 3 horizontal to the right. If the game is the same one as in fig. 2A, the arrangement of the keys would be set automatically to a corresponding arrangement. In other words, the functions of the keys would reassigned so that the top left key c of fig. 2A would have the same function as the top left key c of fig. 2B. It is of course appreciated that physically this is not the same key, but the two keys of figs. 2A and 2B have been assigned the same function by means of logic included in a control unit of the device. The same reassignment is applied for the direction keys of the keypad 8.

Some games do not need any keys besides the joystick 5 or similar keys arranged on the upper part 3. In this case, the device is kept closed while the user is playing the game. If the user is left-handed he can set the device so that he can play the game with the device held as shown in fig. 2C. I.e. he is operating the joystick 5 with the right hand and the keys 6A, 6B with the left hand, and the image shown on the display 4 has the correct orientation. This mode is dependent of the selection of the particular game.

If the user is right-handed, he would like to hold the device as shown in fig. 2D (and 1C) by setting the device in the right-handed mode. All the keys would be reassigned and the display 4 turned the right way automatically so that the position shown in fig. 2D would be correct and operation of the direction keys 9 would result in the correct functions relative to the displayed image.

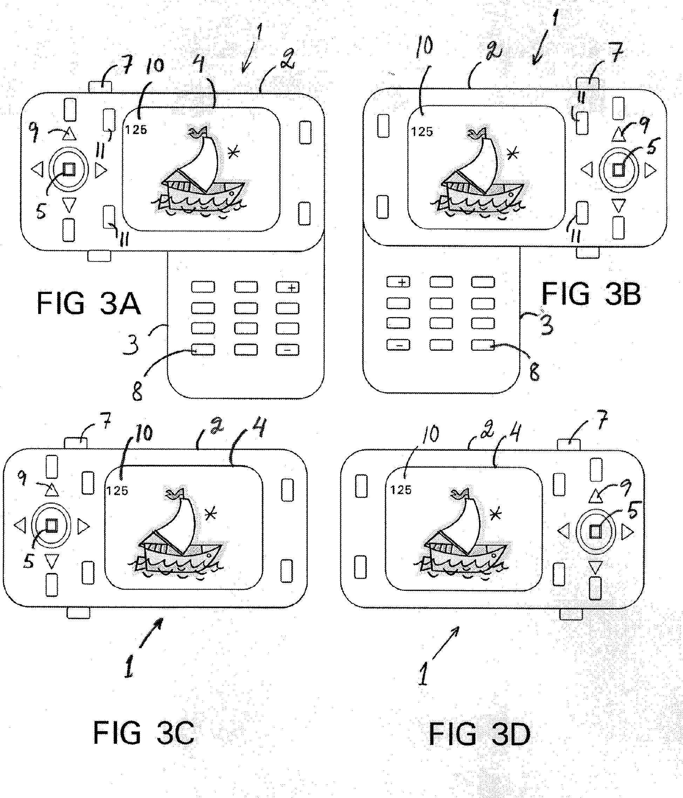

Similarly figs. 3A to 3D illustrate the camera mode. Fig. 3A illustrates the open state with the device in camera mode (video mode or still picture mode as the case may be) in the left-handed mode. The upper part is horizontal since the basic landscape orientation is preferred in a camera, and the lower part is vertical to the right. Of course, in the camera mode the picture in the display will follow what is seen through the lens of the camera. However, character and symbol information 10 and other image objects inserted in the display such as shutter speed settings, zoom operation etc. will be shown with the right side up in dependence of the user settings. The character and symbol information will not change if the user temporarily turns the camera to take a picture in the upright portrait orientation. The shutter control is suitably assigned to the upper side key 7. Zoom functions may be assigned to the joystick 5 and some keys marked with + and - of the keypad 8, or dedicated +/- keys, for instance the volume keys 11.

Fig 3C illustrates the closed state with the device in the camera mode in the left-handed mode when the user selects no to use the lower part of the device.

Figs. 3B and 3D (and 1A) illustrate the preferred right-hand user modes in which the functions of the keys have been reassigned with respect to the left-hand versions. As may be seen, the upper side key 7 for the shutter function and the + and - keys are not the same physical keys as in the left-handed mode in fig. 3A. The inserted character and symbol information has changed 10 with respect to the physical display 4 so that it will not be shown upside down.

It is realized that many left-handed users would still prefer the right-handed modes, because they are already used to them. The invention just gives the user the option.

In all the embodiments above, the buttons and keys used for the specific application may be highlighted for illumination guidance. The highlight function is also made dependent of the user settings to the right-hand or left-hand mode and the specific angle between the two parts of the device as well as on the operation mode.

The invention is implemented with a suitable combination of hardware and software as will be appreciated by a person skilled in the art. The scope of the invention is only limited by the claims below.

## Claims

1. A portable device (1) combining different device categories with different operation modes each having different preferred user interface modes, comprising:
a user interface comprising a keypad (8) with a number of keys and a display (4); **characterised by**
a control unit arranged to control the user interface in dependence of a selected operation mode of the device.

2. A portable device (1) according to claim 1, further comprising:
an upper part (2) and a lower part (3) that can be folded together into a closed state and unfolded into opened states in which the upper part (2) and the lower part (3) are arranged at an angle relative to each other, the device (1) being operable in both the closed and opened states;
said user interface comprising a keypad (8) with a number of keys provided on one of the two parts and a display (4) provided on the other of the two parts, possibly together with further keys; wherein said control unit further is arranged to control the user interface in dependence of the relative angle between the two parts (2, 3).

3. A portable device according to claim 1 or 2, wherein the control unit is further arranged to control the user interface in dependence of predetermined settings selected by a user.

4. A portable device according to claim 3, wherein the predetermined settings include a general right-handed mode and a general left-handed mode.

5. A portable device according to claim 1, 2, 3 or 4, wherein the control unit is arranged to control the orientation of an image object (10) shown on the display.

6. A portable device according to claim 1, 2, 3, 4 or 5, wherein the control unit is arranged to control the assignment of key functions.

7. A portable device according to claim 6, wherein the control unit is arranged to control illumination of keys.

8. A portable device according to any one of the preceding claims, wherein the device (1) is a combined mobile phone, digital camera, and portable game device.
